# NOUVEAU FASCICULE DE BREVET EUROPEEN

(11) **EP 0 844 075 B2**
(45) Date de publication et mention de la décision concernant l'opposition: **25.05.2016**
(45) Mention de la délivrance du brevet: 18.09.2002
(21) Numéro de dépôt: 97402792.2
(22) Date de dépôt: 20.11.1997
(51) Int. Cl.: B32B 17/10, C03C 27/12, B60J 1/00

(54) **Utilisation d'un vitrage feuilleté pour l'amortissement des vibrations d'origine solidienne dans un véhicule**
Verwendung einer Verbundglasscheibe zur Dämmung von durch Festkörper geleiteten Schwingungen in einem Fahrzeug
Use of a laminated glazing to dampen solid-transmitted vibrations in a vehicle

(30) Priorité: 26.11.1996 FR 9614404; 14.02.1997 DE 19705586
(43) Date de publication de la demande: 27.05.1998
(73) Titulaire: SAINT-GOBAIN GLASS FRANCE, 92400 Courbevoie (FR)
(72) Inventeur: Garnier, Gilles, 60150 Thourotte (FR); Kraemling, Franz, Dr., 52072 Aachen (DE); Rehfeld, Marc, 95460 Ezanville (FR)
(74) Mandataire: Muller, René

(56) Documents cités:
- EP-A- 0 387 148
- EP-A- 0 763 420
- EP-A2- 0 852 999
- EP-B1- 0 100 147
- WO-A1-98/26927
- DE-T2- 69 002 842

## Description

La présente invention concerne l'utilisation d'un vitrage pour véhicule et particulièrement pour véhicule automobile, possédant des performances d'isolation acoustique améliorées et spécialement par rapport aux bruits d'origine solidienne.

Les vitrages de protection acoustique sont utilisés pour des fenêtres dans le bâtiment, mais également de plus en plus dans l'automobile. Alors que des vitrages de protection acoustique pour le bâtiment peuvent être relativement très épais, on utilise dans la construction automobile des vitrages feuilletés dont l'épaisseur, en règle générale, ne dépasse pas environ 6 mm. Il convient dès lors d'utiliser comme couche intermédiaire entre les deux feuilles de verre du vitrage, un polymère visco-élastique qui, même en couches relativement minces, produit un effet antibruit très efficace. En outre, le polymère doit également remplir à long terme, c'est-à-dire pendant toute la durée de vie de l'automobile, toutes les conditions qui sont imposées aux polymères utilisés dans les vitrages pour automobiles. Font partie de ces conditions, en particulier un faible degré de turbidité, une grande transparence et une bonne résistance aux ultraviolets. En outre, ces polymères doivent assurer un assemblage de qualité et durable avec les couches adjacentes et conserver leurs bonnes propriétés d'amortissement de bruit même à des températures élevées et basses. Enfin, les couches antibruit ne doivent pas nuire aux propriétés de verre de sécurité du vitrage. Les polymères acryliques visco-élastiques se sont avérés particulièrement appropriés en tant que couches antibruit.

On connaît de par le document EP 0 532 478 A2 un vitrage feuilleté de protection acoustique convenant également comme vitrage d'automobiles et constitué d'une couche intermédiaire en polymère acrylique visco-élastique. Dans le cas de ce vitrage feuilleté connu, la couche intermédiaire séparant les deux feuilles de verre est formée d'une composition monomère polymérisable constituée de 5 à 50% en poids d'un polyuréthanne aliphatique et de 15 à 85% en poids d'un mélange photopolymérisable de différents monomères acryliques et additifs de polymérisation habituels. Le mélange de monomères est admis dans l'espace séparant les deux feuilles de verre et la polymérisation par rayonnement ultraviolet est amorcée. Ce vitrage feuilleté de protection acoustique connu ne convient pas pour la fabrication en série car son procédé de fabrication par polymérisation du mélange de monomères introduit entre les feuilles de verre est en soi relativement coûteux.

Dans le cas du procédé de fabrication industriel de vitrages feuilletés, l'assemblage des deux feuilles de verre avec une pellicule de polymère préfabriquée est généralement réalisé à chaud et sous pression. Un procédé de ce type destiné à la fabrication de vitrages feuilletés présentant de bonnes propriétés d'amortissement de bruit est connu de par le document EP 0 457 190 A1. Dans le cas de ce procédé connu, on utilise une pellicule de polymère préfabriquée présentant un coefficient d'amortissement du bruit élevé et constituée au moins de deux couches dont l'une est faite d'un premier acétal de polyvinyle déterminé et d'un plastifiant et l'autre d'un autre acétal de polyvinyle déterminé et d'un plastifiant.

D'autre part, parmi toutes les qualités concourant au confort dans les moyens de transport modernes comme les trains et les automobiles, le silence devient déterminant. En effet, les autres sources de désagrément d'origine mécanique, thermique ou de visibilité ont été peu à peu maîtrisées. Mais l'amélioration du confort acoustique présente de nouvelles difficultés, les bruits d'origine aérodynamique, c'est-à-dire créés par le frottement de l'air sur le véhicule en déplacement, ont pu, au moins en partie, être eux-mêmes traités à leur source, c'est-à-dire que pour économiser l'énergie, les formes ont été modifiées, on a amélioré la pénétration dans l'air et diminué les turbulences qui sont elles-mêmes source de bruits. Parmi les parois d'un véhicule qui séparent la source de bruits aérodynamiques extérieure de l'espace intérieur où se trouve le passager, les vitrages sont évidemment les plus difficiles à traiter. On ne peut utiliser des absorbants pâteux ou fibreux réservés aux parois opaques et pour des raisons pratiques ou de poids, les épaisseurs ne peuvent être augmentées inconsidérablement. Le brevet européen EP-B1-0 387 148 propose des vitrages qui réalisent une bonne isolation contre les bruits d'origine aérodynamique sans que leur poids et/ou leur épaisseurs soient trop augmentés. Le brevet propose ainsi un vitrage feuilleté dont l'intercalaire possède un amortissement à la flexion ν = Δf/f_{c} supérieur à 0,15, la mesure étant effectuée en excitant par un choc un barreau feuilleté de 9 cm de longueur et 3 cm de largeur fait d'un verre feuilleté où la résine est entre deux verres épais chacun de 4 mm, et en mesurant f_{c}, fréquence de résonance du premier mode, et Δf, largeur du pic à une amplitude A/√2 où A est l'amplitude maximum à la fréquence f_{c} de telle sorte que son indice d'affaiblissement acoustique ne se différencie pour aucune des fréquences supérieures à 800 Hz de plus de 5 dB d'un indice de référence augmentant de 9 dB par octave jusqu'à 2000 Hz et de 3 dB par octave aux fréquences supérieures. De plus, l'écart-type a des différences de son indice d'affaiblissement acoustique par rapport à l'indice de référence reste inférieur à 4 dB. Les épaisseurs des deux verres peuvent être identiques et égales à 2,2 mm. Ce brevet propose ainsi une solution générale au problème de l'isolement acoustique aux bruits aérodynamiques d'un véhicule.

Cependant les bruits eux-mêmes comme les bruits de moteur, bruits de roulements ou de suspension doivent par la même occasion être traités. Ces bruits ont déjà été traités à leur origine ou, en partie, au cours de leur propagation, soit aérienne (revêtement absorbant en particulier) ou dans les solides (pièces de liaison en élastomère par exemple). Au niveau des vitrages, le brevet européen EP-B1-0 100 701 propose des vitrages qui réalisent une bonne protection contre les bruits de route, c'est-à-dire une bonne isolation des bruits au cours de leur propagation aérienne.

Un des vitrages selon ce brevet comprend au moins un vitrage feuilleté et la résine du vitrage feuilleté est telle qu'un barreau de 9 cm de longueur et de 3 cm de largeur constitué d'un verre feuilleté comprenant deux feuilles de verre de 4 mm d'épaisseur réunies par une couche de 2 mm de cette résine, ait une fréquence critique qui diffère au plus de 35 % de celle d'un barreau de verre ayant la même longueur, la même largeur et 4 mm d'épaisseur. Les vitrages selon ce brevet présentent un excellent indice d'affaiblissement acoustique vis-à-vis du trafic routier.

La demande de brevet européen EP 0 763 420 propose également des vitrages qui réalisent une bonne isolation contre les bruits d'origine aérodynamique en associant un film en polyvinylbutyral à une couche de résine présentant une grande efficacité acoustique contre les bruits d'origine aérodynamique telle qu'une résine d'acétate de polyvinyle.

Par contre, le traitement des vitrages contre les bruits d'origine solidienne, c'est-à-dire contre les bruits transmis par l'intermédiaire des solides, est plus difficile à réaliser. En effet, il s'avère que l'emploi de pièces de liaison reste insuffisant pour éviter la transmission du bruit par vibration des vitrages. Il a été constaté, à cet effet, qu'à certaines vitesses de rotation du moteur, un bourdonnement perceptible par le passager apparaissait et causait ainsi une source de désagrément. En effet, la rotation du moteur provoque la création de vibrations qui se transmettent, par exemple, à la carrosserie et ainsi, par effet de chaîne, aux vitrages. On sait que l'énergie acquise par un objet soumis à un choc engendre un phénomène de vibration et qu'aussitôt après le choc, l'objet redevenu libre vibre selon son propre mode. A chaque mode est associé une fréquence de vibration. L'amplitude de la vibration dépend de l'excitation initiale, c'est-à-dire de la composante spectrale du choc (amplitude du choc à la fréquence étudiée) et de la zone d'impact du choc, la déformation modale étant plus ou moins importante selon que le choc se produit à un ventre ou à un noeud de vibration.

Pour qu'un mode propre soit excité, il faut :
(1) que la déformation provoquée au point d'impact ne se situe pas sur un noeud de vibration du mode,
(2) que le spectre d'énergie de choc ait une composante à la fréquence de résonnance du mode.

Cette dernière condition est pratiquement toujours remplie, car un choc très bref présente un spectre d'énergie pratiquement uniforme.

La première condition est également remplie et, pour un barreau libre à ses extrémités, par exemple, il suffit de taper à l'une des extrémités pour exciter tous les modes.

Dans l'application en l'occurence, l'excitation solidienne est périphérique et les inventeurs ont mis en évidence qu'à certaines fréquences de vibration du moteur, c'est-à-dire à certaines vitesses de rotation du moteur, les vitrages et l'habitacle du véhicule avaient chacun un mode de vibration, dont le couplage amplifiait le bourdonnement, issu du rayonnement des bruits provenant en l'occurence du moteur, par les vitrages. Bien entendu, la vitesse de rotation du moteur à l'origine de ces phénomènes est particulière à chaque type de véhicule et ne peut être ainsi généralisée à une unique valeur.

La demanderesse a établi qu'en utilisant une résine répondant à des conditions originales, différentes de celles proposées dans les brevets précédemment cités, pour réunir les feuilles d'un feuilleté de verre, ce dernier propose des qualités d'amortissement des sons audibles d'origine solidienne particulièrement satisfaisantes, bien supérieures à celles obtenues jusqu'alors.

L'invention a pour but l'utilisation, pour l'amortissement des vibrations d'origine solidienne, d'un vitrage feuilleté comprenant au moins une feuille de verre et un film intercalaire selon les caractéristiques de la revendication 1.

La technique de l'invention permet d'obtenir un vitrage de protection acoustique constitué d'un vitrage feuilleté dont le film intercalaire procure un amortissement des vibrations transmises notamment par la carrosserie en provenance du moteur, amortissement tel que le rayonnement des modes de vibration du vitrage soit tellement affaibli qu'il n'y ait plus de couplage avec les modes de vibration de l'habitacle et cela quelle que soit la vitesse de rotation du moteur.

Selon l'invention, le film intercalaire donnant des propriétés d'amortissement est associé à au moins un film de performances acoustiques banales. Ainsi, il est permis de substituer une partie de l'épaisseur d'un film acoustique cher, par un film "banal" et bon marché sans dégradation des propriétés acoustiques mais avec, par exemple, une sensible amélioration des propriétés de tenue mécanique et également toute la gamme des propriétés additionnelles que peut procurer un tel film, par exemple :couleurs, anti-UV ou diffusion de la lumière.

Selon l'invention, le film intercalaire est une pellicule de polymère acrylique thermoplastique de 0,05 à 1,0 mm d'épaisseur et cette pellicule est unie à une feuille de verre avec intercalation d'une pellicule de polyester de 0,01 à 0,1 mm d'épaisseur et d'une couche de colle thermoplastique de 0,3 à 0,8 mm d'épaisseur. Conformément à l'invention, une mince pellicule de polyester, en particulier de téréphtalate de polyéthylène est également intercalée entre la pellicule de polymère acrylique et la couche de colle thermoplastique.

On a constaté qu'un vitrage feuilleté de cette structure pouvait non seulement être fabriqué sans problème à l'aide des procédés d'assemblage habituels et convenir ainsi pour la fabrication en série, mais également pouvait permettre l'exclusion de toutes les influences défavorables de la pellicule de polymère acrylique par l'adjonction d'une mince pellicule de PET entre la pellicule de polymère acrylique et la couche de colle thermoplastique qui est constituée d'une pellicule de polyvinylbutyral habituelle pour la fabrication de vitrages feuilletés. En effet, lorsque la pellicule de polymère acrylique est en contact direct avec la pellicule de polyvinylbutyral, des particules du plastifiant de la pellicule de PVB diffusent apparemment dans le polymère acrylique et y provoquent les effets de turbidité ainsi qu'une dégradation des propriétés d'amortissement de bruit. De façon surprenante, les pellicules de PET, même lorsqu'elles n'ont qu'une très faible épaisseur inférieure à 50 µm, représentent un barrage parfait contre la diffusion pour le plastifiant de la pellicule de PVB. En outre, grâce à leurs propriétés superficielles, les pellicules de PET s'unissent aussi bien à la pellicule d'acrylate thermoplastique qu'aux pellicules de PVB habituelles, de sorte que les vitrages feuilletés à utiliser suivant l'invention satisfont à toutes les exigences même en ce qui concerne la résistance à long terme et la sécurité.

Dans sa forme de réalisation la plus simple, le vitrage feuilleté à utiliser suivant l'invention est constitué de deux feuilles de verre entre lesquelles sont interposées les pellicules susmentionnées suivant l'ordre de couches PVB-PET-acrylate-PET-PVB. On peut évidemment également remplacer les pellicules de PVB habituelles par des pellicules de colle thermoplastiques faites d'autres matières, en particulier par de telles pellicules faites de polyuréthannes thermoplastiques appropriés.

Suivant une autre forme de réalisation, le vitrage feuilleté à utiliser suivant l'invention n'est constitué que d'une feuille de verre qui, à l'état monté, est tournée vers l'extérieur, tandis que la surface du vitrage feuilleté tournée vers l'habitacle est formée d'une couche de polymère présentant une résistance à l'abrasion suffisante. De tels vitrages en verre et en matière synthétique offrent certains avantages en ce qui concerne le poids et les propriétés de sécurité et sont connus en tant que tels sous différentes formes.

Des pellicules constituées de polymères acryliques visco-élastiques présentant un module de cisaillement G' compris entre 10^{6,5} Pa à 0°C et 10^{4,5} Pa à 60°C, ainsi qu'un facteur de perte tanδ compris entre 0,8 et 1 dans une plage de températures de 0 à 60°C, s'avèrent appropriés pour l'invention. En font par exemple partie les produits de la firme 3M qui sont commercialisés sous le nom "Scotchdamp-Polymere". Ces produits consistent en des polymères acryliques qui ne contiennent pas de plastifiant et dont les propriétés d'amortissement couvrent une large plage de températures. Le type de produit ISD 112, dont les propriétés d'amortissement se trouvent dans la plage de températures comprise entre 0 et 60°C, s'est avéré particulièrement approprié.

Selon une variante avantageuse de l'invention, l'une des couches du vitrage feuilleté, en particulier une pellicule de téréphtalate de polyéthylène, est pourvue d'une couche réfléchissant le rayonnement infrarouge.

Selon une réalisation de l'invention, le vitrage feuilleté comporte deux feuilles de verre d'épaisseur identique. Cette épaisseur commune pourra être égale à 2,2 mm. Ainsi, la technique de l'invention permet d'obtenir un vitrage de protection acoustique dont l'épaisseur totale est relativement faible.

Selon une réalisation avantageuse de l'invention, le module de cisaillement G' du film intercalaire donnant des propriétés d'amortissement aux bruits est compris entre 10⁶ et 2.10⁷ N/m².

Les vitrages à utiliser selon l'invention présentent l'avantage qu'une bonne isolation contre les bruits d'origine solidienne est obtenue ainsi qu'une bonne isolation contre les bruits d'origine aérodynamique et également contre les bruits extérieurs.

La caractérisation dynamique du film intercalaire est réalisée sur un viscoanalyseur du type viscoanalyseur Metravib, dans certaines conditions de mesures qui sont énoncées ci-après :
- sollicitation sinusoïdale,
- éprouvette dite de double cisaillement constituée de deux parallélépipèdes rectangles de dimension :
   * épaisseur = 3,31 mm
   * largeur = 10,38 mm
   * hauteur = 6,44 mm
- amplitude dynamique : ± 5 mm autour de la position de repos,
- domaine de fréquence : 5 à 700 Hz
- domaine de température : - 20 à + 60°C.

Le viscoanalyseur permet de soumettre un échantillon de matériau à des sollicitations de déformations dans des conditions précises de température et de fréquence, et ainsi d'obtenir et de traiter l'ensemble des grandeurs rhéologiques caractérisant le matériau.

L'exploitation des données brutes des mesures de force, déplacement et déphasage, en fonction de la fréquence, à chaque température, permet notamment le calcul des grandeurs suivantes :
- composante élastique (ou module de cisaillement) G',
- tangente de l'angle de perte (ou facteur de perte) tanδ

Ainsi, on trace les courbes maîtresses de G' et de tanδ en fonction de la fréquence et pour différentes températures, en utilisant la loi d'équivalence fréquence/température.

L'exploitation de ces courbes maîtresses fait apparaître les zones de transition vitreuse. On calcule ainsi l'amortissement à la transition vitreuse.

En effet, c'est à la transition vitreuse que l'amortissement est le meilleur.

La technique selon l'invention propose l'utilisation d'un vitrage feuilleté pour véhicule comprenant un film intercalaire possédant un bon amortissement des bruits transmis par les solides. Cet amortissement peut aussi répondre aux critères d'isolement aux bruits aérodynamiques et aux bruits extérieurs. Ainsi, le vitrage selon l'invention permet d'obtenir une bonne protection acoustique générale.

D'autres avantages et caractéristiques de l'invention apparaîtront dans la description suivante faite en référence aux dessins annexés :
la Fig. 1 représente une première forme de réalisation du vitrage feuilleté à utiliser suivant l'invention;
la Fig. 2 représente une deuxième forme de réalisation du vitrage feuilleté à utiliser suivant l'invention, et
la Fig. 3 représente le degré d'amortissement en fonction de la fréquence d'un vitrage feuilleté habituel et du vitrage feuilleté représenté sur la Fig. 1.

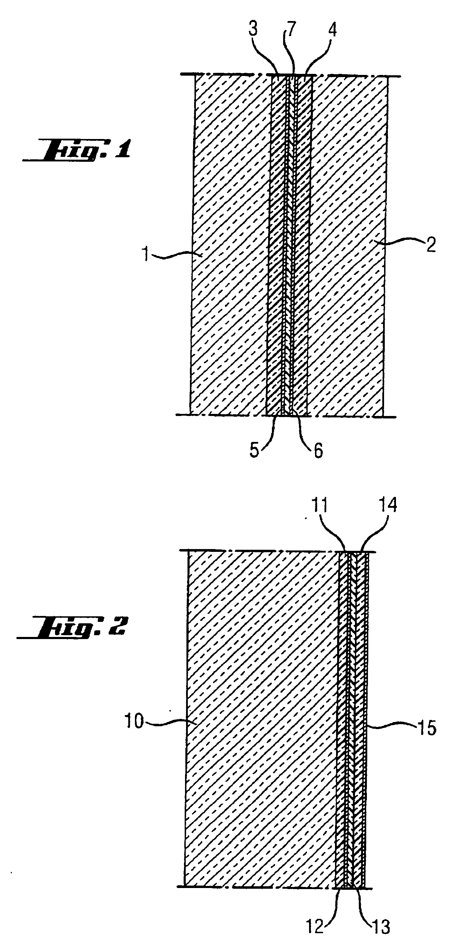

La Fig. 1 est une vue en coupe fragmentaire de la structure d'un vitrage feuilleté, tel qu'il est utilisé pour les pare-brise et également de plus en plus pour les vitres latérales et les lunettes arrière. Bien entendu, il est également possible d'utiliser la même structure pour des pare-brise et des lunettes arrière d'automobiles, le cas échéant avec des feuilles de verre au silicate d'épaisseurs légèrement différentes.

Le vitrage feuilleté est constitué de deux feuilles de verre au silicate 1, 2, chacune de 1,6 à 3 mm d'épaisseur, de deux couches de polyvinylbutyral 3, 4, chacune de 0,38 mm d'épaisseur, de deux minces pellicules de PET 5, 6, ainsi que d'une pellicule 7 de polymère acrylique visco-élastique interposée entre ces dernières. Les pellicules de PET 5, 6 ont respectivement une épaisseur de 0,05 mm. La pellicule 7 consiste en une pellicule de polymère Scotchdamp de 0,05 mm d'épaisseur, du type ISD 112 de la société 3M. Les différentes couches sont juxtaposées d'une façon habituelle dans la fabrication de vitrages feuilletés et leur assemblage est réalisé à chaud et sous pression.

La pellicule de PET 5 ou la pellicule de PET 6 peut être placée sur une face d'un système de couches réfléchissant le rayonnement infrarouge. Outre ses propriétés d'amortissement du bruit, un tel vitrage feuilleté réfléchissant le rayonnement infrarouge assure un effet de protection thermique accru contre le rayonnement thermique incident. En outre, les vitrages feuilletés à utiliser selon l'invention ont, grâce à l'intégration de pellicules de PET, un effet anti-effractions accru, de sorte que des automobiles de très grand confort peuvent être fabriquées.

Le vitrage feuilleté représenté sur la Fig. 2 ne comprend qu'une feuille de verre au silicate 10. La feuille de verre au silicate 10, par exemple de 4 mm d'épaisseur, est tournée, à l'état monté, vers l'extérieur de l'automobile. Une couche de PVB 11 de 0,76 mm d'épaisseur est unie à la feuille de verre au silicate 10. La couche de PVB 11 est suivie d'une pellicule de PET 12 de 0,05 mm d'épaisseur, d'une pellicule de polymère Scotchdamp 13 de type ISD 112 de 0,05 mm d'épaisseur et d'une pellicule de PET 14 de 0,1 mm d'épaisseur, qui est pourvue sur sa surface libre d'une couche résistant à l'abrasion 15. Comme dans le cas de la première forme de réalisation décrite, la pellicule de PET 12 ou la pellicule de PET 14 peut, en l'occurrence, également être pourvue d'une couche réfléchissant le rayonnement infrarouge, par exemple d'une couche multiple appliquée suivant un procédé sous vide et constituée d'une couche fonctionnelle en argent.

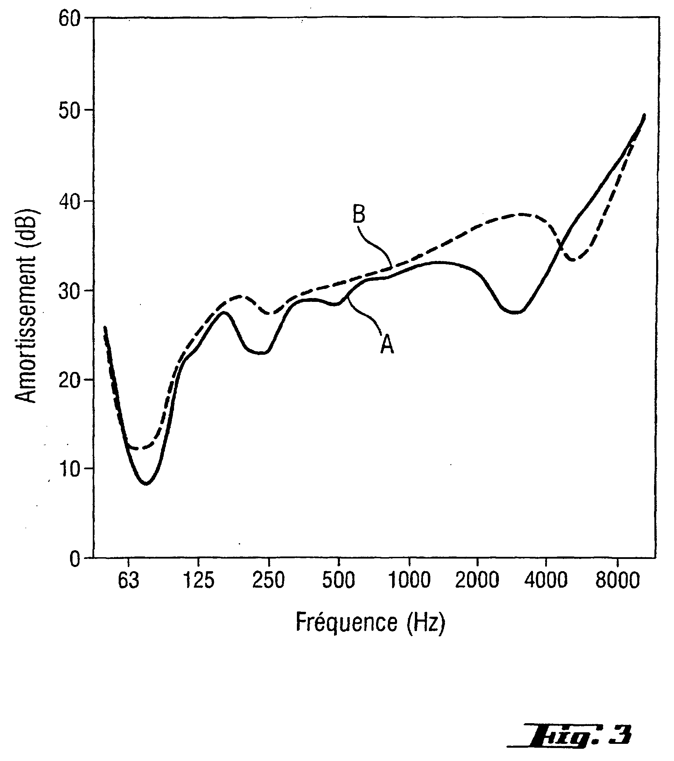

Le diagramme représenté sur la Fig. 3 met en évidence l'amélioration de l'amortissement du bruit atteinte par l'invention. Sur ce diagramme, l'amortissement du bruit exprimé en dB est donné en fonction de la fréquence, et ce, pour un vitrage feuilleté de structure habituelle (courbe A) et pour un vitrage feuilleté de la structure décrite avec référence à la Fig. 1 (courbe B). Les mesures sont effectuées sur des vitrages feuilletés plats de 80 X 50 cm. L'épaisseur des feuilles de verre au silicate vaut, dans les deux cas, 2,1 mm. Le modèle de comparaison présentant l'allure d'amortissement de la courbe A a la structure suivante : 2,1 mm de verre - 0,76 mm de PVB - 2,1 mm de verre, tandis que le modèle conforme à l'invention a la structure suivante : 2,1 mm de verre - 0,38 mm de PVB -0,05 mm de PET - 0,05 mm de polymère acrylique - 0,05 mm de PET - 0,38 mm de PVB - 2,1 mm de verre.

Les résultats montrent que le degré d'amortissement du vitrage à employer suivant l'invention est supérieur au degré d'amortissement du vitrage de comparaison dans la partie de loin la plus grande du spectre de fréquences. Toutefois, c'est en particulier dans la région comprise environ entre 200 et 300 Hz et dans la région de la fréquence de coïncidence à environ 3000 Hz, dans lesquelles les courbes d'amortissement des vitrages présentent les creux les plus grands dans le cas du vitrage feuilleté habituel, que les degrés d'amortissement du bruit mesurés sont nettement plus élevés, de sorte que, dans l'ensemble, une amélioration considérable de l'amortissement du bruit est atteinte.

## Revendications

1. Utilisation pour l'amortissement des vibrations d'origine solidienne d'un vitrage feuilleté constitué d'au moins une feuille de verre et d'un film intercalaire, **caractérisée en ce que**
- l'intercalaire du vitrage feuilleté possède un facteur de perte tanδ supérieur à 0,6 et un module de cisaillement G' inférieure à 2.10⁷ N/cm², dans un domaine de température compris entre 10 et 60°C et dans un domaine de fréquence compris entre 50 et 10 000 Hz, les mesures du facteur de perte et du module de cisaillement de l'intercalaire étant effectuées sur viscoanalyseur du type viscoanalyseur Metravib dans les conditions de mesure ci-après :
- sollicitation sinusoïdale,
- éprouvette dite de double cisaillement constituée de deux parallélépipèdes rectangles de dimensions :
* épaisseur = 3,31 mm
* largeur = 10,38 mm
* hauteur = 6,44 mm
- amplitude dynamique : ± 5 mm autour de la position de repos,
- domaine de fréquence : 5 à 700 Hz,
- domaine de température : -20 à +60°C,
- ledit film intercalaire est associé à au moins un film de performances acoustiques banales,
- le film intercalaire est une pellicule de polymère acrylique thermoplastique (7, 13) de 0,05 à 1,0 mm d'épaisseur et cette pellicule (7 ; 13) est unie à une feuille de verre (1, 2, 10) avec intercalation d'une pellicule de polyester (5, 6 ; 12) de 0,01 à 0,1 mm d'épaisseur, en particulier de téréphtalate de polyéthylène, et d'une pellicule de colle thermoplastique (3, 4, 11) de 0,3 à 0,8 mm d'épaisseur, constituée de polyvinyl butyral, cette pellicule de colle thermoplastique constituée de polyvinyl butyral constituant le film de performances acoustiques banales,
- la pellicule de polymère acrylique thermoplastique (7, 13) est constituée de polymère visco-élastique fait de polymère acrylique sans plastifiant présentant un module de cisaillement G' compris entre 10^{4,5} Pa à 60°C et 10^{6,5} Pa à 0°C, ainsi qu'un facteur de perte tanδ compris entre 0,8 et 1 dans une plage de températures de 0 à 60°C.

2. Utilisation selon la revendication 1, **caractérisé en ce que** le vitrage est constitué de deux feuilles de verre (1, 2) qui sont respectivement unies à la pellicule acrylique thermoplastique (7) par l'intermédiaire d'une pellicule de colle thermoplastique (3, 4) constituée de polyvinyl butyral et d'une pellicule de polyester (5, 6).

3. Utilisation selon la revendication 1, **caractérisée en ce que** le vitrage comporte une feuille de verre (10), une pellicule de colle thermoplastique (11) constituée de polyvinyl butyral, une pellicule de polyester (12) interposée entre la pellicule de colle thermoplastique (11) constituée de polyvinyl butyral et la pellicule (13) de polymère acrylique et une pellicule de polyester (14) juxtaposée à l'autre face de la pellicule (13) de polymère acrylique et pourvue sur sa surface libre d'une couche résistant à l'abrasion (15).

4. Utilisation selon l'une quelconque des revendications 1 à 3, **caractérisée en ce que** l'une des couches du vitrage feuilleté, en particulier une pellicule de téréphtalate de polyéthylène, est pourvue d'une couche réfléchissant le rayonnement infrarouge.

## Patentansprüche

1. Verwendung zur Dämpfung von Schwingungen mit Festkörperursprung eines Verbundglases, das aus mindestens einer Glasscheibe und einer Zwischenfolie besteht, **dadurch gekennzeichnet, dass**
- die Zwischenfolie des Verbundglases einen Verlustfaktor tanδ von über 0,6 und einen Schubmodul G' von unter 2·10⁷N/m² in einem Temperaturbereich von 10 bis 60 °C und in einem Frequenzbereich von 50 bis 10 000 Hz aufweist, wobei die Messungen des Verlustfaktors und des Schubmoduls der Zwischenfolie mit einem Viskoanalysator des Typs Viskoanalysator unter den nachstehenden Messbedingungen durchgeführt werden:
- sinusförmige Beanspruchung,
- Doppelscherprobekörper, der aus zwei parallelepipedischen Rechtecken mit den Abmessungen
* Dicke = 3,31 mm,
* Breite = 10,38 mm,
* Höhe = 6,44 mm
besteht,
- dynamische Amplitude: ± 5 mm um die Ruheposition,
- Frequenzbereich: 5 bis 700 Hz,
- Temperaturbereich: -20 bis +60 °C,
- die Zwischenfolie mit mindestens einer Folie mit üblichen akustischen Eigenschaften verbunden ist,
- die Zwischenfolie eine Folie aus einem thermoplastischen Polyacryl (7, 13) mit einer Dicke von 0,05 bis 1,0 mm ist und diese Folie (7; 13) mit einer Glasscheibe (1, 2, 10) unter Einfügen einer insbesondere aus Polyethylenterephthalat bestehenden Polyesterfolie (5, 6; 12) mit einer Dicke von 0,01 bis 0,1 mm und einer thermoplastischen Haftfolie (3, 4, 11) mit einer Dicke von 0,3 bis 0,8 mm aus Polyvinylbutyral verbunden ist, wobei diese thermoplastische Haftfolie aus Polyvinylbutyral die Folie mit üblichen akustischen Eigenschaften bildet,
- die Folie aus einem thermoplastischen Polyacryl (7, 13) aus einem viskoelastisches Polymer aus Polyacryl ohne Weichmacher besteht, das einen Schubmodul G' von 10^{4,5} Pa bei 60 °C bis 10^{6,5} Pa bei 0 °C sowie einen Verlustfaktor tanδ von 0,8 bis 1 in einem Temperaturbereich von 0 bis 60 °C aufweist.

2. Verwendung nach Anspruch 1, **dadurch gekennzeichnet, dass** die Verglasung aus zwei Glasscheiben (1, 2) besteht, die jeweils mit der thermoplastischen Polyacrylfolie (7) über eine thermoplastische Haftfolie (3, 4) aus Polyvinylbutyral und eine Polyesterfolie (5, 6) verbunden sind.

3. Verwendung nach Anspruch 1, **dadurch gekennzeichnet, dass** die Verglasung eine Glasscheibe (10), eine thermoplastische Haftfolie (11) aus Polyvinylbutyral, eine Polyesterfolie (12), die zwischen der thermoplastischen Haftfolie (11) aus Polyvinylbutyral und der Polyacrylfolie (13) eingefugt ist, und eine Polyesterfolie (14), die auf der anderen Seite der Polyacrylfolie (13) angeordnet und auf der freien Seite mit einer abriebfesten Schicht (15) versehen ist, aufweist.

4. Verwendung nach einem der Ansprüche 1 bis 3, **dadurch gekennzeichnet, dass** eine der Schichten des Verbundglases, insbesondere eine Polyethylenterephthalatfolie, mit einer die Infrarotstrahlung reflektierenden Schicht versehen ist.

## Claims

1. Use for the damping of solid vibrations of a laminated glazing constituted by at least one glass sheet and an interlayer film, **characterized in that**
- the interlayer of the laminated glazing has a tan δ loss factor above 0.6 and a shear modulus G' below 2.10⁷ N/cm², in a temperature range between 10 and 60°C and in a frequency range between 50 and 10,000 Hz, the loss factor and the sheer modulus of the interlayer being measured on a viscoanalyzer of the Metravib type, under the measuring conditions below:
- sinusoidal stressing,
- so-called double shear testpiece constituted by two rectangular parallelepipeds of
* thickness 3.31 mm,
* width 10.38 mm
* height 6.44 mm
- dynamic range: ± 5 mm around the rest position,
- frequency range: 5 to 700 Hz
- temperature range: -20 to +60°C,
- said interlayer film is combined with at least one film having standard acoustic performance characteristics,
- the interlayer film is a thermoplastic, acrylic polymer film (7, 13) with a thickness of 0.05 to 1.0 mm and said film (7; 13) is joined to a glass sheet (1, 2, 10) with the interposing of a polyester film (5, 6; 12) with a thickness or 0.01 to 0.1 mm, particularly of polyethylene terephthalate, and a thermoplastic adhesive film (3, 4, 11) with a thickness of 0.3 to 0.8 mm, constituted by polyvinyl butyral, this thermoplastic adhesive film constituted by polyvinyl butyral constituting the film having standard acoustic performance characteristics,
- the thermoplastic acrylic polymer film (7, 13) is constituted by a viscoelastic polymer formed from acrylic polymer without plasticizer and having a shear modulus G' between 10^{4.5} Pa at 60°C and 10^{6.5} Pa at 0°C, as well as a tan δ loss factor between 0.8 and 1 in a temperature range of 0 to 60°C.

2. Use according to claim 1, **characterized in that** the glazing is constituted by two glass sheets (1, 2) respectively joined to the thermoplastic acrylic film (7) by means of a thermoplastic adhesive film (3, 4) constituted by polyvinyl butyral and a polyester film (5, 6).

3. Use according to claim 1, **characterized in that** the glazing comprises a glass sheet (10), a thermoplastic adhesive film (11) constituted by polyvinyl butyral, a polyester film (12) interposed between the thermoplastic adhesive film (11) constituted by polyvinyl butyral and the acrylic polymer film (13) and a polyester film (14) juxtaposed with the other face of the acrylic polymer film (13) and provided on its free surface with an abrasion-resistant layer (15).

4. Use according to any one of the claims 1 to 3, **characterized in that** one of the layers of the laminated glazing, in particular a polyethylene terephthalate film, is provided with an infrared radiation-reflecting layer.
